# EUROPEAN PATENT APPLICATION

(11) **EP 4 518 210 A1**
(43) Date of publication of application: **05.03.2025**
(21) Application number: 22938890.5
(22) Date of filing: 25.04.2022
(51) Int. Cl.: H04L 1/18, H04W 72/12

(54) **HYBRID AUTOMATIC REPEAT REQUEST (HARQ) FEEDBACK PROCESSING METHOD AND APPARATUS THEREFOR**

(71) Applicant: Beijing Xiaomi Mobile Software Co., Ltd., Beijing 100085 (CN)
(72) Inventor: ZHU, Yajun, Beijing 100085 (CN)
(74) Representative: Hersina, Günter
(86) International application number: PCT/CN2022/089100
(87) International publication number: WO 2023/206033

(57) **Abstract**

Disclosed in embodiments of the present disclosure are a hybrid automatic repeat request (HARQ) feedback processing method and an apparatus therefor. The method is executed by a terminal device, and the method comprises: receiving a control instruction sent by a network side device; and determining whether scheduled data supports an HARQ feedback function, wherein the scheduled data is data scheduled after the control instruction is received, or data scheduled according to the control instruction. By implementing the embodiments of the present disclosure, the terminal device can determine, on the basis of the received instruction, whether the scheduled data supports the hybrid HARQ feedback function, and then determine whether to enable an HARQ feedback function for the scheduled data, thereby avoiding excessive HARQ processes, preventing the validity of data transmission caused by insufficient HARQ process of the terminal device, and improving data transmission efficiency of the terminal device.

## Description

### TECHNICAL FIELD

The disclosure relates to the field of communication technologies, and provides a method and a device for processing hybrid automatic repeat request HARQ feedback.

### BACKGROUND

In related technologies, in communication scenarios where there is a long signal transmission distance between a transmitter and a receiver (for example, a satellite communicates with a ground device), there will be a large delay in data transmission, resulting in a problem that hybrid automatic repeat request (HARQ) blocking may occur to some terminal devices in Internet of Things, thereby reducing the transmission rate of the terminal device.

### SUMMARY

Embodiments of the present disclosure provide a method and a device for processing hybrid automatic repeat request HARQ feedback, so that the terminal device can determine whether to enable the HARQ feedback function for scheduled data by determining whether the scheduled data supports the HARQ feedback function, which avoids a problem of HARQ blocking due to excessive HARQ processes, and prevents the reduction in the effectiveness of data transmission caused by insufficient HARQ process of the terminal device, thereby improving the data transmission efficiency of the terminal device.

In a first aspect, an embodiment of the present disclosure provides a feedback processing method, which is performed by a terminal device. The method includes: receiving a control command transmitted by a network side device; and determining whether scheduled data supports a HARQ feedback function.

Based on the technical solution of the present disclosure, the terminal device can determine whether the scheduled data supports the HARQ feedback function based on the received control command, and then can determine whether to enable the HARQ feedback function for the scheduled data, which avoids a problem of HARQ blocking due to excessive HARQ processes, and prevents the reduction in the effectiveness of data transmission caused by insufficient HARQ process of the terminal device, thereby improving the data transmission efficiency of the terminal device.

In an implementation, whether current data scheduling by a first physical layer control signaling supports the HARQ feedback function is determined based on the control command, where the control command is the first physical layer control signaling used to indicate HARQ enabled and/or HARQ disabled.

By implementing the technical solution of the present disclosure, the terminal device can enable and/or disable HARQ for the data scheduled by the control command based on the control command including the first physical layer control signaling, which avoids a problem of HARQ blocking due to excessive HARQ processes, and prevents the reduction in the effectiveness of data transmission caused by insufficient HARQ process of the terminal device, thereby improving the data transmission efficiency of the terminal device.

In an implementation, whether data scheduling within a first time period supports the HARQ feedback function is determined based on the control command, where the control command is a second physical layer control signaling used to indicate HARQ enabled or HARQ disabled, and the first time period.

Based on the technical solution of the present disclosure, the terminal device can enable or disable HARQ within the first time period based on the control command including the second physical layer control signaling, which avoids a problem of HARQ blocking due to excessive HARQ processes, and prevents the reduction in the effectiveness of data transmission caused by insufficient HARQ process of the terminal device, thereby improving the data transmission efficiency of the terminal device.

In an implementation, the determining whether scheduled data supports the HARQ feedback function includes determining, based on the control command, data scheduling within a second time period supports the HARQ feedback function, where the control command is a third physical layer control signaling used to indicate HARQ enabled or HARQ disabled, and the second time period is a time period starting from reception of the third physical layer control signaling used to indicate HARQ enabled, and ending until reception of the third physical layer control signaling used to indicate HARQ disabled; or the second time period is a time period starting from reception of the third physical layer control signaling used to indicate HARQ disabled, and ending until reception of the third physical layer control signaling used to indicate HARQ enabled.

Based on the technical solution of the present disclosure, the terminal device can enable or disable HARQ based on the received control command including the second physical layer control signaling, which avoids a problem of HARQ blocking due to excessive HARQ processes, and prevents the reduction in the effectiveness of data transmission caused by insufficient HARQ process of the terminal device, thereby improving the data transmission efficiency of the terminal device.

In an implementation, the method further includes: after the terminal device transmits uplink data, waiting for a scheduling command or a HARQ feedback further transmitted by the network side device, and determining whether to retransmit the uplink data based on the scheduling command or the HARQ feedback further transmitted by the network side device, where the control command is a control command for uplink transmission, and the scheduled data supports the HARQ feedback function; or, after the terminal device transmits uplink data, clearing a data cache in a HARQ process corresponding to the uplink data, where the control command is a control command for uplink transmission, and the scheduled data does not support the HARQ feedback function.

Based on the technical solution of the present disclosure, the terminal device can determine whether the scheduled data supports the HARQ feedback function or not based on the received control command for uplink transmission, and can clear the data cache in the HARQ process corresponding to the data when the scheduled data does not support the HARQ feedback function, which avoids a problem of HARQ blocking due to excessive HARQ processes, and prevents the reduction in the effectiveness of data transmission caused by insufficient HARQ process of the terminal device, thereby improving the data transmission efficiency of the terminal device.

In an implementation, the method further includes: after the terminal device receives downlink data, feeding back HARQ feedback information of the downlink data at an indicated position, where the control command is a control command for downlink transmission, and the scheduled data supports the HARQ feedback function; or, after the terminal device receives downlink data, disabling HARQ feedback, and clearing a data cache in a HARQ process corresponding to the downlink data, where the control command is the control command for downlink transmission, and the scheduled data does not support the HARQ feedback function.

Based on the technical solution of the present disclosure, the terminal device can determine whether the scheduled data supports the HARQ feedback function based on the received control command for downlink transmission, and can clear a data cache in the HARQ process corresponding to the data when the scheduled data does not support the HARQ feedback function, which avoids a problem of HARQ blocking due to excessive HARQ processes, and prevents the reduction in the effectiveness of data transmission caused by insufficient HARQ process of the terminal device, thereby improving the data transmission efficiency of the terminal device.

In an implementation, the determining whether the scheduled data supports the HARQ feedback function includes: determining whether the scheduled data supports the HARQ feedback function, based on indication information of a predetermined information field in the control command.

In an optional implementation, a length and/or a position of the predetermined information field are defined by a protocol; or, a length and/or a position of the predetermined information field are preconfigured.

In an implementation, the determining whether the scheduled data supports the HARQ feedback function includes: determining a correspondence between a value of a radio network temporary identifier (RNTI) and whether the HARQ feedback function is supported, where the control command is a scheduling command; parsing the scheduling command to obtain a target RNTI value in the scheduling command; and determining whether the scheduled data supports the HARQ feedback function, based on the correspondence and the target RNTI value.

Based on the technical solution of the present disclosure, the terminal device can determine whether the scheduled data supports the HARQ feedback function based on the RNTI value in the received scheduling command, and then can determine whether to enable or disable HARQ, which avoids a problem of HARQ blocking due to excessive HARQ processes, and prevents the reduction in the effectiveness of data transmission caused by insufficient HARQ process of the terminal device, thereby improving the data transmission efficiency of the terminal device.

In an implementation, the determining whether the scheduled data supports the HARQ feedback function includes: determining a correspondence between a scrambling sequence and whether the HARQ feedback function is supported, where the control command is a scheduling command; parsing the scheduling command to obtain a target scrambling sequence in the scheduling command; and determining whether the scheduled data supports the HARQ feedback function, based on the correspondence and the target scrambling sequence.

Based on the technical solution of the present disclosure, the terminal device can determine whether the scheduled data supports the HARQ feedback function based on the scrambling sequence in the received scheduling command, and then can determine whether to enable or disable HARQ, which avoids a problem of HARQ blocking due to excessive HARQ processes, and prevents the reduction in the effectiveness of data transmission caused by insufficient HARQ process of the terminal device, thereby improving the data transmission efficiency of the terminal device.

In a second aspect, an embodiment of the present disclosure provides a method for processing hybrid automatic repeat request (HARQ) feedback, which is performed by a network side device. The method includes: transmitting a control command to a terminal device; where the control command is used to instruct the terminal device to determine whether scheduled data supports a HARQ feedback function.

In an implementation, the control command is a first physical layer control signaling used to indicate HARQ enabled and/or HARQ disabled; and the first physical layer control signaling is used to indicate whether current data scheduling supports the HARQ feedback function.

In an implementation, the control command is a second physical layer control signaling used to indicate HARQ enabled and/or HARQ disabled, and a first time period; and the second physical layer control signaling is used to indicate whether data scheduling within a first time period supports the HARQ feedback function.

In an implementation, the control command is a third physical layer control signaling used to indicate HARQ enabled or HARQ disabled, and the third physical layer control signaling is used to indicate whether data scheduling within a second time period supports the HARQ feedback function, where the second time period is a time period starting from reception of the third physical layer control signaling used to indicate HARQ enabled, and ending until reception of the third physical layer control signaling used to indicate HARQ disabled; or the second time period is a time period starting from reception of the third physical layer control signaling used to indicate HARQ disabled, and ending until reception of the third physical layer control signaling used to indicate HARQ enabled.

In an implementation, the control command is a control command for uplink transmission or a control command for downlink transmission.

In an implementation, the control command includes a predetermined information field; and the predetermined information field is used to indicate whether the scheduled data supports the HARQ feedback function.

In an optional implementation, a length and/or a position of the predetermined information field are defined by a protocol; or, a length and/or a position of the predetermined information field are preconfigured.

Based on the technical solution of the present disclosure, the network side device can instruct the terminal device whether the scheduled data supports the HARQ feedback function through the control command, so that the terminal device enables or disables HARQ, which avoids a problem of HARQ blocking due to excessive HARQ processes of the terminal device, and prevents the reduction in the effectiveness of data transmission caused by insufficient HARQ process of the terminal device, thereby improving the data transmission efficiency of the terminal device.

In an implementation, the transmitting the control command to the terminal device includes: scrambling the control command based on a target radio network temporary identifier (RNTI) value, where the control command is a scheduling command; and transmitting the scheduling command scrambled with the target RNTI value to the terminal device, where the scheduling command scrambled with the target RNTI value is used to implicitly indicate whether the scheduled data supports the HARQ feedback function.

In an implementation, the transmitting the control command to the terminal device includes: scrambling the control command on a radio network temporary identifier (RNTI) with a target scrambling sequence, where the control command is a scheduling command; and transmitting the scheduling command scrambled with the target scrambling sequence to the terminal device, where the scheduling command scrambled with the target scrambling sequence is used to implicitly indicate whether the scheduled data supports the HARQ feedback function.

In a third aspect, an embodiment of the present disclosure provides a communication device. The device includes: a transceiver module, configured to receive a control command transmitted by a network side device; and a processing module, configured to determine whether scheduled data supports a HARQ feedback function.

In an implementation, the processing module is specifically configured to: determine, based on the control command, whether current data scheduling by a first physical layer control signaling supports the HARQ feedback function, where the control command is the first physical layer control signaling used to indicate HARQ enabled and/or HARQ disabled.

In an implementation, the processing module is specifically configured to: determine, based on the control command, whether data scheduling within a first time period supports the HARQ feedback function, where the control command is a second physical layer control signaling used to indicate HARQ enabled or HARQ disabled, and the first time period.

In an implementation, the processing module is specifically configured to: determine, based on the control command, whether data scheduling within a second time period supports the HARQ feedback function, where the control command is a third physical layer control signaling used to indicate HARQ enabled or HARQ disabled, and the second time period is a time period starting from reception of the third physical layer control signaling used to indicate HARQ enabled, and ending until reception of the third physical layer control signaling used to indicate HARQ disabled; or the second time period is a time period starting from reception of the third physical layer control signaling used to indicate HARQ disabled, and ending until reception of the third physical layer control signaling used to indicate HARQ enabled.

In an implementation, the transceiver module is further configured to: after the terminal device transmits uplink data, wait for a scheduling command or a HARQ feedback further transmitted by the network side device, and determine whether to retransmit the uplink data based on the scheduling command or the HARQ feedback further transmitted by the network side device, where the control command is a control command for uplink transmission, and the scheduled data supports the HARQ feedback function; or, after the terminal device transmits uplink data, clear a data cache in a HARQ process corresponding to the uplink data, where the control command is a control command for uplink transmission, and the scheduled data does not support the HARQ feedback function.

In an implementation, the transceiver module is further configured to: after the terminal device receives downlink data, feed back HARQ feedback information of the downlink data at an indicated position, where the control command is a control command for downlink transmission, and the scheduled data supports the HARQ feedback function; or, after the terminal device receives downlink data, disable HARQ feedback, and clear a data cache in a HARQ process corresponding to the downlink data, where the control command is a control command for downlink transmission, and the scheduled data does not support the HARQ feedback function.

In an implementation, the processing module is specifically configured to determine whether the scheduled data supports the HARQ feedback function, based on indication information of a predetermined information field in the control command.

In an optional implementation, a length and/or a position of the predetermined information field are defined by a protocol; or, a length and/or a position of the predetermined information field are preconfigured.

In an implementation, the processing module is specifically configured to: determine a correspondence between a value of a radio network temporary identifier (RNTI) and whether the HARQ feedback function is supported, where the control command is a scheduling command; parse the scheduling command to obtain a target RNTI value in the scheduling command; and determine whether the scheduled data supports the HARQ feedback function, based on the correspondence and the target RNTI value.

In an implementation, the processing module is specifically configured to: determine a correspondence between a scrambling sequence and whether the HARQ feedback function is supported, where the control command is a scheduling command; parse the scheduling command to obtain a target scrambling sequence in the scheduling command; and determine whether the scheduled data supports the HARQ feedback function, based on the correspondence and the target scrambling sequence.

In a fourth aspect, an embodiment of the present disclosure provides a communication device. The device includes a transceiver module configured to transmit a control command to a terminal device; where the control command is used to instruct the terminal device to determine whether scheduled data supports a HARQ feedback function.

In an implementation, the control command is a first physical layer control signaling used to indicate HARQ enabled and/or HARQ disabled; and the first physical layer control signaling is used to indicate whether current data scheduling supports the HARQ feedback function.

In an implementation, the control command is a second physical layer control signaling used to indicate HARQ enabled and/or HARQ disabled, and a first time period; and the second physical layer control signaling is used to indicate whether data scheduling within a first time period supports the HARQ feedback function.

In an implementation, the control command is a third physical layer control signaling used to indicate HARQ enabled or HARQ disabled, and the third physical layer control signaling is used to indicate whether data scheduling within a second time period supports the HARQ feedback function, where the second time period is a time period starting from reception of the third physical layer control signaling used to indicate HARQ enabled, and ending until reception of the third physical layer control signaling used to indicate HARQ disabled; or the second time period is a time period starting from reception of the third physical layer control signaling used to indicate HARQ disabled, and ending until reception of the third physical layer control signaling used to indicate HARQ enabled.

In an implementation, the control command is a control command for uplink transmission or a control command for downlink transmission.

In an optional implementation, the control command includes a predetermined information field; and the predetermined information field is used to indicate whether the scheduled data supports the HARQ feedback function.

In an implementation, a length and/or a position of the predetermined information field are defined by a protocol; or, a length and/or a position of the predetermined information field are preconfigured.

In an implementation, the transceiver module is specifically configured to: scramble the control command based on a target radio network temporary identifier (RNTI) value, where the control command is a scheduling command; and transmit the scheduling command scrambled with the target RNTI value to the terminal device, where the scheduling command scrambled with the target RNTI value is used to implicitly indicate whether the scheduled data supports the HARQ feedback function.

In an implementation, the transceiver module is specifically configured to: scramble the control command on a radio network temporary identifier (RNTI) with a target scrambling sequence, where the control command is a scheduling command; and transmit the scheduling command scrambled with the target scrambling sequence to the terminal device, where the scheduling command scrambled with the target scrambling sequence is used to implicitly indicate whether the scheduled data supports the HARQ feedback function.

In a fifth aspect, an embodiment of the present disclosure provides a communication device. The communication device includes a processor. The processor executes a computer program in a memory to perform the method described in the first aspect.

In a sixth aspect, an embodiment of the present disclosure provides a communication device. The communication device includes a processor. The processor executes a computer program in a memory to perform the method described in the second aspect.

In a seventh aspect, an embodiment of the present disclosure provides a communication device. The communication device includes a processor and a memory. A computer program is stored in the memory, and the processor executes the computer program stored in the memory to cause the communication device to perform the method described in the first aspect.

In an eighth aspect, an embodiment of the present disclosure provides a communication device. The communication device includes a processor and a memory. A computer program is stored in the memory, and the processor executes the computer program stored in the memory to cause the communication device to perform the method described in the second aspect.

In a ninth aspect, an embodiment of the present disclosure provides a communication device, which includes a processor and an interface circuit. The interface circuit is configured to receive code instructions and transmit the same to the processor, and the processor is configured to execute the code instructions to cause the device to perform the method described in the first aspect.

In a tenth aspect, an embodiment of the present disclosure provides a communication device, which includes a processor and an interface circuit. The interface circuit is configured to receive code instructions and transmit the same to the processor, and the processor is configured to execute the code instructions to cause the device to perform the method described in the second aspect.

In an eleventh aspect, an embodiment of the present disclosure provides a system for processing hybrid automatic repeat request feedback. The system includes the communication device described in the third aspect and the communication device described in the fourth aspect; or the system includes the communication device described in the fifth aspect and the communication device described in the sixth aspect; or the communication device described in the seventh aspect and the communication device described in the eighth aspect; or the communication device described in the ninth aspect and the communication device described in the tenth aspect.

In a twelfth aspect, an embodiment of the present invention provides a computer readable storage medium, configured to store instructions. The instructions are executed to cause the terminal device to execute the method described in the first aspect.

In a thirteenth aspect, an embodiment of the present invention provides a readable storage medium, configured to store instructions used by the above network side device. The instructions are executed to cause the network side device to execute the method described in the second aspect.

In a fourteenth aspect, the present disclosure further provides a computer program product including a computer program, which, when running on a computer, causes the computer to execute the method described in the first aspect.

In a fifteenth aspect, the present disclosure further provides a computer program product including a computer program, which, when running on a computer, causes the computer to execute the method described in the second aspect.

In a sixteenth aspect, the present disclosure provides a chip system. The chip system includes at least one processor and an interface for supporting a terminal device to implement the functions involved in the first aspect, for example, determining or processing at least one item of data or information involved in the above methods. In a possible design, the chip system further includes a memory, and the memory is used to store necessary computer programs and data for the terminal device. The chip system may be formed by chip(s), or may include chip(s) and other discrete device(s).

In a seventeenth aspect, the present disclosure provides a chip system. The chip system includes at least one processor and an interface for supporting a network side device to implement the functions involved in the first aspect, for example, determining or processing at least one item of data or information involved in the above methods. In a possible design, the chip system further includes a memory, and the memory is used to store necessary computer programs and data for the network side device. The chip system may be formed by chip(s), or may include chip(s) and other discrete device(s).

In an eighteenth aspect, the present disclosure provides a computer program. When running on a computer, the computer program causes the computer to execute the method described in the first aspect.

In a nineteenth aspect, the present disclosure provides a computer program. When running on a computer, the computer program causes the computer to execute the method described in the second aspect.

### BRIEF DESCRIPTION OF THE DRAWINGS

In order to more clearly illustrate the technical solutions in the embodiments of the disclosure or in the background technology, the drawings required to be used in the embodiments or in the background technology of the disclosure will be described below.
FIG. 1 is a schematic architectural diagram of a communication system provided by an embodiment of the present disclosure.
FIG. 2 is a schematic flowchart of a method for processing hybrid automatic repeat request feedback provided by an embodiment of the present disclosure.
FIG. 3 is another schematic flowchart of a method for processing hybrid automatic repeat request feedback provided by an embodiment of the present disclosure.
FIG. 4 is a schematic diagram of hybrid automatic repeat request feedback provided by an embodiment of the present disclosure.
FIG. 5 is yet another schematic flowchart of a method for processing hybrid automatic repeat request feedback provided by an embodiment of the present disclosure.
FIG. 6 is still yet another schematic flowchart of a method for processing hybrid automatic repeat request feedback provided by an embodiment of the present disclosure.
FIG. 7 is another schematic diagram of a hybrid automatic repeat request feedback provided by an embodiment of the present disclosure.
FIG. 8 is still yet another schematic flowchart of a method for processing hybrid automatic repeat request feedback provided by an embodiment of the present disclosure.
FIG. 9 is still yet another schematic flowchart of a method for processing hybrid automatic repeat request feedback provided by an embodiment of the present disclosure.
FIG. 10 is still yet another schematic flowchart of a method for processing hybrid automatic repeat request feedback provided by an embodiment of the present disclosure.
FIG. 11 is still yet another schematic flowchart of a method for processing hybrid automatic repeat request feedback provided by an embodiment of the present disclosure.
FIG. 12 is still yet another schematic flowchart of a method for processing hybrid automatic repeat request feedback provided by an embodiment of the present disclosure.
FIG. 13 is still yet another schematic flowchart of a method for processing hybrid automatic repeat request feedback provided by an embodiment of the present disclosure.
FIG. 14 is still yet another schematic flowchart of a method for processing hybrid automatic repeat request feedback provided by an embodiment of the present disclosure.
FIG. 15 is a schematic structural diagram of a communication device provided by an embodiment of the present disclosure.
FIG. 16 is another schematic structural diagram of a communication device provided by an embodiment of the present disclosure.
FIG. 17 is a schematic structural diagram of a chip provided by an embodiment of the present disclosure.

### DETAILED DESCRIPTION

For ease of understanding, terminologies involved in the present disclosure are first introduced.

### 1. Downlink control information (DCI)

DCI is carried by a physical downlink control channel (PDCCH). DCI may include uplink and downlink data scheduling, hybrid automatic repeat request (HARQ) information, power control, etc. PDCCH is a physical channel used to carry downlink scheduling information.

### 2. Scrambling

Scrambling is a digital signal processing method that XOR operation is performed on an original signal with a scrambling code to obtain a new signal. Usually, the function of scrambling an uplink physical channel is to distinguish different terminal devices, and downlink scrambling can distinguish cells and channels. The scrambling code can be used to scramble and descramble the original signal. For example, the scrambling code may be used to scramble a downlink control information (DCI), or may also be called scrambling a PDCCH. Scrambling the DCI may specifically refer to scrambling a cyclic redundancy check (CRC) field of the DCI. Correspondingly, the terminal device descrambles the received DCI, which specifically refers to that the terminal device descrambles the CRC field of the DCI using a corresponding type of scrambling code to determine the format or the type of the DCI.

The scrambling code may include but not limited to: cell radio network temporary identifier (C-RNTI), temporary cell radio network temporary identifier (TC-RNTI) and random access radio network temporary identifier (RA-RNTI).

### a) C-RNTI and TC-RNTI

In a case where a terminal device is in a radio resource control connected (RRC-connected) state, it means that a C-RNTI has been assigned to the terminal device, and the terminal device needs to carry the C-RNTI when initiating a random access request to a network side device. In a case where a terminal device is in an RRC idle state or an RRC inactive state, it means that a C-RNTI has not been assigned to the terminal device. If the terminal device requests an RRC connection, a network side device may assign a temporary C-RNTI to the terminal device in the subsequent response message, represented as TC-RNTI. After the random access of the terminal device is successful, the TC-RNTI may be changed to C-RNTI.

### b) RA-RNTI

In the random access process, the generation of RA-RNTI is related to a time-frequency resource used by the terminal device to transmit the preamble. For example, when terminal device A and terminal device B initiate random access using the same time-frequency resource of random access channel, the corresponding RA-RNTIs are the same.

In order to better understand the feedback processing method and device disclosed in the embodiments of the present disclosure, the communication system to which the embodiments of the present disclosure are applicable will be described below.

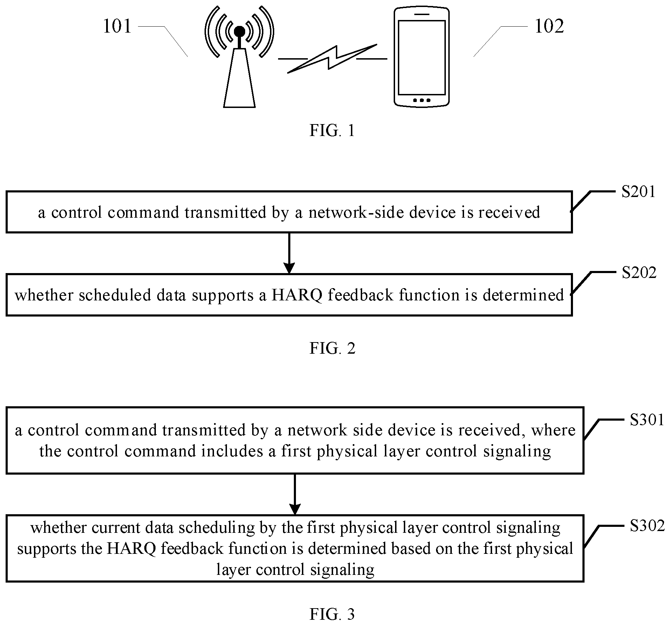

Referring to FIG. 1, FIG. 1 is a schematic architectural diagram of a communication system provided by an embodiment of the present disclosure. The communication system may include but not limited to one network side device and one terminal device. The number and the form of devices shown in FIG. 1 are only for examples and do not constitute a limitation on the embodiments of the present disclosure. In actual applications, the communication system may include two or more network side devices, and two or more terminal devices. The communication system shown in FIG. 1 includes a network side device 101 and a terminal device 102, which are taken as an example.

It should be noted that the technical solution of the embodiments of the present disclosure can be applied to various communication systems, for example, long term evolution (LTE) system, 5th generation (5G) mobile communication system, 5G new radio (NR) system, or other future new mobile communication systems.

The network side device 101 in the embodiments of the present disclosure is an entity on the network side that is used to transmit or receive signals. For example, the network side device 101 may be an evolved NodeB (eNB), a transmission reception point (TRP), a next generation NodeB (gNB) in the NR system, a base station in other future mobile communication systems, or an access node in a wireless fidelity (WiFi) system, etc. The specific technologies and the specific device form used by the network side device are not limited in the embodiments of the present disclosure. The network side device provided by the embodiments of the present disclosure may include a centralized unit (CU) and a distributed unit (DU). The CU may also be referred to as a control unit. Protocol layers of the network side device, for example, a base station, may be split by using the structure of CU-DU, where functions of some protocol layers are arranged on the CU for centralized control, some or all of functions of the remaining protocol layers are distributed in the DU, and the CU centrally controls the DU.

The terminal device 102 in the embodiments of the present disclosure is an entity on the user side that is used to receive or transmit signals, such as a mobile phone. The terminal device may also be referred to as terminal, user equipment (UE), mobile station (MS), mobile terminal (MT), etc. The terminal device may be a car with communication functions, a smart car, a mobile phone, a wearable device, a tablet computer (Pad), a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in smart city, a wireless terminal in smart home, etc. The specific technologies and the specific device form used by the terminal device are not limited in the embodiments of the present disclosure.

It will be appreciated that the communication system described in the embodiments of the present disclosure is to more clearly illustrate the technical solutions of the embodiments of the present disclosure, and does not constitute a limitation on the technical solutions provided by the embodiments of the present disclosure. As those of ordinary skill in the art will know, with the evolution of the system architecture and the emergence of new service scenarios, the technical solutions provided by the embodiments of the present disclosure are also applicable to similar technical problems.

The feedback processing method and device provided by the present disclosure will be introduced in detail below with reference to the accompanying drawings.

Reference is made to FIG. 2, which is a schematic flowchart of a feedback processing method provided by an embodiment of the present disclosure. As shown in FIG. 2, the feedback processing method may include but not limited to the following steps.

At step S201, a control command transmitted by a network side device is received.

In the embodiments of the present disclosure, the control command is used to indicate whether scheduled data supports a HARQ feedback function.

At step S202, whether scheduled data supports a HARQ feedback function is determined.

In embodiments of the present disclosure, the scheduled data is data scheduled after receiving the control command, or data scheduled by the control command.

For example, the terminal device receives a control command, and determines, based on the control command, whether the data scheduled after receiving the control command supports the HARQ feedback function; or the terminal device parses the control command to obtain data that needs to be scheduled by the control command, so as to determine whether the data scheduled by the control command supports the HARQ feedback function.

By implementing the embodiments of the present disclosure, the terminal device can determine whether the scheduled data supports the HARQ feedback function or not based on the received control command, and then can determine whether to enable the HARQ feedback function for the scheduled data, which avoids a problem of HARQ blocking due to excessive HARQ processes, and prevents the reduction in the effectiveness of data transmission caused by insufficient HARQ process of the terminal device, thereby improving the data transmission efficiency of the terminal device.

In an implementation of the present disclosure, the control command may be a scheduling command, so that the terminal device can also enable and/or disable the HARQ feedback function for current data scheduling based on the control command. As an example, referring to FIG. 3, FIG. 3 is a schematic flowchart of another feedback processing method provided by an embodiment of the present disclosure. The control command in the feedback processing method includes a first physical layer control signaling, and the first physical layer control signaling is used to indicate HARQ enabled and/or HARQ disabled. As shown in FIG. 3, the method may include but not limited to the following steps.

At step S301, a control command transmitted by a network side device is received, where the control command includes a first physical layer control signaling.

In an embodiment of the present disclosure, the first physical layer control signaling is used to indicate HARQ enabled and/or HARQ disabled.

As an example, a control command transmitted by a network side device is received, where the control command includes a first physical layer control signaling used to indicate HARQ enabled.

As another example, a control command transmitted by a network side device is received, where the control command includes a first physical layer control signaling used to indicate HARQ disabled.

As another example, a control command transmitted by a network side device is received, where the control command includes a first physical layer control signaling used to indicate HARQ enabled and/or HARQ disabled.

In some embodiments of the present disclosure, the first physical layer control signaling may be a DCI.

At step S302, whether current data scheduling by the first physical layer control signaling supports the HARQ feedback function is determined based on the first physical layer control signaling.

As an example, the first physical layer control signaling indicates HARQ enabled, and after receiving the control command, the terminal device enables the HARQ feedback function for the data scheduled by the control command.

As another example, the first physical layer control signaling indicates HARQ disabled, and after receiving the control command, the terminal device disables the HARQ feedback function for the data scheduled by the control command.

As another example, the first physical layer control signaling indicates HARQ enabled and/or HARQ disabled, after receiving the control command, the terminal device enables the HARQ feedback function for the data scheduled by the control command, and after transmission of the data scheduled by the control command is completed, the HARQ feedback function is disabled.

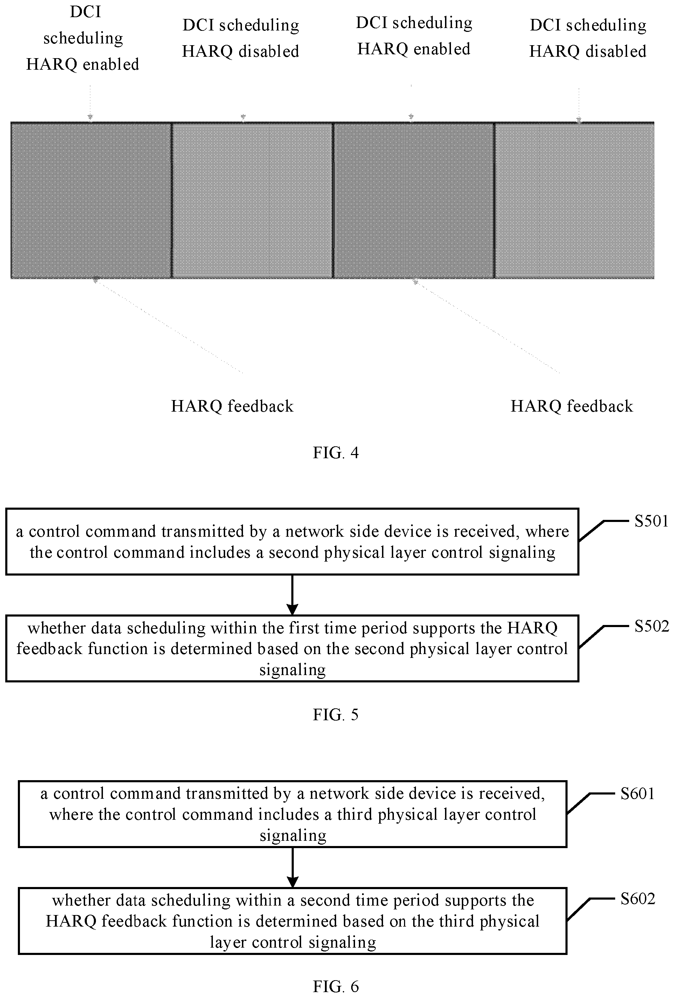

Referring to FIG. 4, FIG. 4 is a schematic diagram of hybrid automatic repeat request feedback provided by an embodiment of the present disclosure. As shown in FIG. 4, when the received control command includes information about scheduling HARQ enabled, the terminal device enables the HARQ feedback function for HARQ feedback; when the received control command includes information about scheduling HARQ disabled, the terminal device does not perform HARQ feedback and disables the HARQ feedback function to avoid the problem of HARQ blocking due to excessive HARQ processes.

By implementing the embodiments of the present disclosure, the terminal device can determine whether the data that needs to be scheduled by the control command supports the HARQ feedback function or not, based on the first physical layer control signaling included in the received control command, and then can determine whether to enable the HARQ feedback function, which avoids a problem of HARQ blocking due to excessive HARQ processes, and prevents the reduction in the effectiveness of data transmission caused by insufficient HARQ process of the terminal device, thereby improving the data transmission efficiency of the terminal device.

In an implementation of the present disclosure, the control command may be a control command used to indicate HARQ enabled or HARQ disabled for a time period, so that the terminal device can also enable or disable HARQ feedback function within the time period based on the control command. As an example, reference is made to FIG. 5, which is another schematic flowchart of a feedback processing method provided by an embodiment of the present disclosure. The feedback processing method includes a second physical layer control signaling, the second physical layer control signaling is used to indicate HARQ enabled and/or HARQ disabled, and a first time period. As shown in FIG. 5, the method may include but not limited to the following steps.

At step S501, a control command transmitted by a network side device is received, where the control command includes a second physical layer control signaling.

In an embodiment of the present disclosure, the second physical layer control signaling is used to indicate HARQ enabled and/or HARQ disabled, and the first time period. The first time period refers to a time period during which HARQ is enabled or disabled as indicated by the second physical layer control signaling.

As an example, a control command transmitted by a network side device is received, where the control command includes a second physical layer control signaling, and the second physical layer control signaling is used to indicate HARQ enabled within a first time period.

As another example, the control command includes a second physical layer control signaling, and the second physical layer control signaling is used to indicate that HARQ is disabled within the first time period.

At step S502, whether data scheduling within the first time period supports the HARQ feedback function is determined based on the second physical layer control signaling.

As an example, the second physical layer control signaling indicates HARQ enabled, and the terminal device enables the HARQ feedback function within the first time period after receiving the control command.

As another example, the second physical layer control signaling indicates HARQ disabled, and the terminal device disables the HARQ feedback function within the first time period after receiving the control command.

By implementing the embodiments of the present disclosure, the terminal device can enable or disable HARQ within the first time period based on the control command including the second physical layer control signaling, which avoids excessive HARQ processes, and prevents the reduction in the effectiveness of data transmission caused by insufficient HARQ process of the terminal device, thereby improving data transmission efficiency of the terminal device.

In an implementation of the present disclosure, the control command may be a control command used to indicate HARQ enabled or HARQ disabled, so that the terminal device can directly enable or disable the HARQ feedback function based on the control command. Referring to FIG. 6, FIG. 6 is another schematic flowchart of a feedback processing method provided by an embodiment of the present disclosure. The feedback processing method includes a third physical layer control signaling, and the third physical layer control signaling is used to indicate HARQ enabled or HARQ disabled. As shown in FIG. 6, the method may include but not limited to the following steps.

At step S601, a control command transmitted by a network side device is received, where the control command includes a third physical layer control signaling.

In an embodiment of the present disclosure, the third physical layer control signaling is used to indicate HARQ enabled or HARQ disabled.

As an example, a control command transmitted by the network side device is received, where the control command includes a third physical layer control signaling used to indicate HARQ enabled.

As another example, a control command transmitted by the network side device is received, where the control command includes a third physical layer control signaling used to indicate HARQ disabled.

At step S602, whether data scheduling within a second time period supports the HARQ feedback function is determined based on the third physical layer control signaling.

The second time period is a time period starting from reception of the third physical layer control signaling used to indicate HARQ enabled, and ending until reception of the third physical layer control signaling used to indicate HARQ disabled; or the second time period is a time period starting from reception of the third physical layer control signaling used to indicate HARQ disabled, and ending until reception of the third physical layer control signaling used to indicate HARQ enabled.

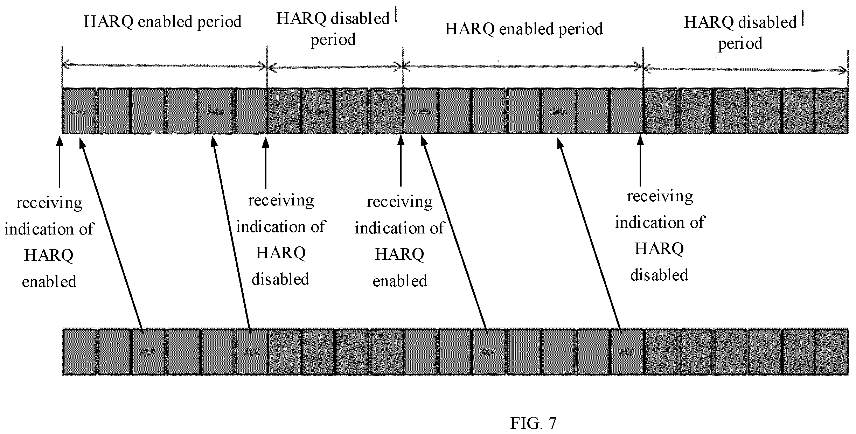

As an example, referring to FIG. 7, FIG. 7 is another schematic diagram of a hybrid automatic repeat request feedback provided by an embodiment of the present disclosure. As shown in FIG. 7, after receiving a control command including a third physical layer control signaling used to indicate HARQ enabled, the terminal device enables the HARQ feedback function until the terminal device receives another control command including a third physical layer control signaling used to indicate HARQ disabled. After receiving the control command including the third physical layer control signaling used to indicate HARQ disabled, the terminal device disables the HARQ feedback function until the terminal device receives a control command including the second physical layer control signaling used to indicate HARQ enabled.

It should be noted that the HARQ enable period shown in FIG. 7 represents information of a time period during which the terminal supports HARQ feedback. The information of the time period may be indicated to the terminal device by the network side device through a predefined HARQ enabled pattern. The HARQ disable period shown in FIG. 7 represents a time period during which the terminal device disables the HARQ feedback function, and the HARQ enable period represents a time period during which the terminal device enables the HARQ feedback function. Time length information of the above time periods may be indicated to the terminal device by the network side device through a predefined HARQ pattern. For example, the terminal device may receive a HARQ pattern transmitted by the network side device, and the HARQ pattern may include time information of HARQ enabled and/or time information of HARQ disabled. The time information of HARQ enabled is used to instruct the terminal device to enable the HARQ feedback function within a time period, and the time information of HARQ enabled may include any one or more of a time starting position, a time ending position and time length information, to indicate a specific time period during which the terminal device enables the HARQ feedback function. The time information of HARQ disabled instructs the terminal device to disable the HARQ feedback function within a time period, and may also instruct the terminal device to enable the HARQ feedback function during any other periods except the above time period. The time information of HARQ disabled may also include any one or more of a time starting position, a time ending position and time length information, to indicate a specific time period during which the terminal device disables the HARQ feedback function.

By implementing the embodiments of the present disclosure, the terminal device can enable or disable HARQ based on a received control command including the second physical layer control signaling, which avoids a problem of HARQ blocking due to excessive HARQ processes, and prevents the reduction in the effectiveness of data transmission caused by insufficient HARQ process of the terminal device, thereby improving the data transmission efficiency of the terminal device.

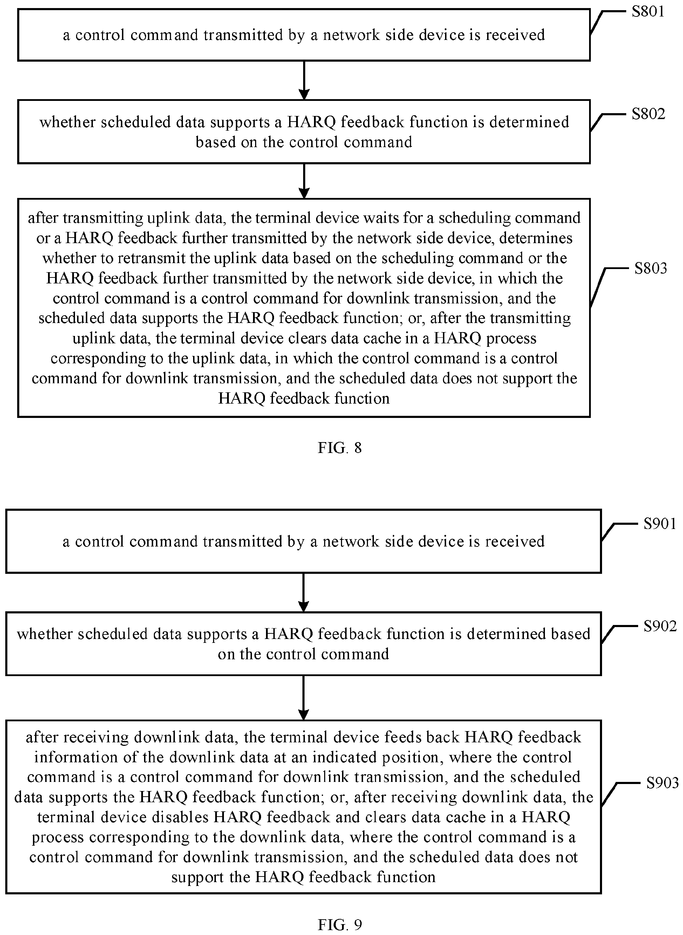

It should be noted that the feedback processing method in the embodiments of the present disclosure is applicable to scenarios of uplink transmission and downlink transmission of the terminal device. In the scenario of the uplink transmission of the terminal device, in an implementation of the present disclosure, the control command for the uplink transmission may be used as the control command, so that the terminal device can enable or disable the HARQ feedback function for scheduled uplink data based on the control command. As an example, referring to FIG. 8, FIG. 8 is another schematic flowchart of a feedback processing method provided by an embodiment of the present disclosure. The control command of the feedback processing method is a control command for the uplink transmission. As shown in FIG. 8, the method may include but not limited to the following steps.

At step S801, a control command transmitted by a network side device is received.

In the embodiments of the present disclosure, the control command is a control command for uplink transmission.

In the embodiments of the present disclosure, step S801 can be implemented in any manner in various embodiments of the present disclosure, which are not be limited by the embodiments of the present disclosure, and will not be repeated again.

At step S802, whether scheduled data supports a HARQ feedback function is determined based on the control command.

In the embodiments of the present disclosure, step S802 can be implemented in any manner in multiple embodiments of the present disclosure, which are not be limited by the embodiments of the present disclosure, and will not be repeated again.

At step S803, after transmitting uplink data, the terminal device waits for a scheduling command or a HARQ feedback further transmitted by the network side device, determines whether to retransmit the uplink data based on the scheduling command or the HARQ feedback further transmitted by the network side device, where the control command is a control command for downlink transmission, and the scheduled data supports the HARQ feedback function; or, after the transmitting uplink data, the terminal device clears a data cache in a HARQ process corresponding to the uplink data, where the control command is a control command for downlink transmission, and the scheduled data does not support the HARQ feedback function.

As an example, data scheduled by the control command for uplink transmission supports the HARQ feedback function. In this example, after transmitting the data scheduled by the control command for uplink transmission, the terminal device waits for a scheduling command further transmitted by the network side device. It is assumed that the scheduling command further transmitted by the network side device indicates that the terminal device needs to retransmit the data scheduled by the uplink scheduling command, the terminal device needs to retransmit the data to the network side device; or, it is assumed that the scheduling command further transmitted by the network side device indicates that the terminal device does not need to retransmit the uplink data, the terminal device does not need to retransmit the data to the network side device.

As another example, data scheduled by the control command for uplink transmission supports the HARQ feedback function. In this example, after transmitting the data scheduled by the control command for uplink transmission, the terminal device waits for a HARQ feedback transmitted by the network side device. In a case where the HARQ feedback transmitted by the network side device indicates that the terminal device needs to retransmit the data scheduled by the control command, the terminal device needs to retransmit the data to the network side device; or, in a case where the HARQ feedback transmitted by the network side device indicates that the terminal device does not need to retransmit the uplink data, the terminal device does not need to retransmit the data to the network side device.

As another example, data scheduled by the control command for uplink transmission does not support the HARQ feedback function, and after transmitting the data scheduled by the control command for uplink transmission, the terminal device clears a data cache in a HARQ process corresponding to the data.

By implementing the embodiments of the present disclosure, the terminal device can determine whether the scheduled uplink data supports the HARQ feedback function or not based on the received control command for uplink transmission, and can clear the data cache in the HARQ process corresponding to the data when the scheduled data does not support the HARQ feedback function, which avoids a problem of HARQ blocking due to excessive HARQ processes, and prevents the reduction in the effectiveness of data transmission caused by insufficient HARQ process of the terminal device, thereby improving the data transmission efficiency of the terminal device.

In the scenario of downlink transmission of the terminal device, in an implementation of the present disclosure, the control command for the downlink transmission may be used as the control command, so that the terminal device can enable or disable the HARQ feedback function for the scheduled downlink data based on the control command. As an example, referring to FIG. 9, FIG. 9 is another schematic flowchart of a feedback processing method provided by an embodiment of the present disclosure. The control command of the feedback processing method is a control command for downlink transmission. As shown in FIG. 9, the method may include but not limited to the following steps.

At step S901, a control command transmitted by a network side device is received.

In the embodiments of the present disclosure, step S901 can be implemented in any one in multiple embodiments of the present disclosure, which are not be limited by the embodiments of the present disclosure, and will not be described again.

At step S902, whether scheduled data supports a HARQ feedback function is determined based on the control command.

In the embodiments of the present disclosure, step S902 can be implemented in any one in multiple embodiments of the present disclosure, which are not be limited by the embodiments of the present disclosure, and will not be described again.

At step S903, after receiving downlink data, the terminal device feeds back HARQ feedback information of the downlink data at an indicated position, where the control command is a control command for downlink transmission, and the scheduled data supports the HARQ feedback function; or, after receiving downlink data, the terminal device disables HARQ feedback and clears a data cache in a HARQ process corresponding to the downlink data, where the control command is a control command for downlink transmission, and the scheduled data does not support the HARQ feedback function.

As an example, data scheduled by the control command for downlink transmission supports the HARQ feedback function. In this example, after receiving the downlink data transmitted by the network side device, the terminal device feeds back HARQ feedback information of the received downlink data at the position indicated by the control command for downlink transmission.

As another example, data scheduled by the downlink scheduling command does not support the HARQ feedback function. In this example, after receiving the downlink data transmitted by the network side device, the terminal device disables its own HARQ feedback and clears a data cache in a HARQ process corresponding to the received downlink data.

By implementing the embodiments of the present disclosure, the terminal device can determine whether the scheduled downlink data supports the HARQ feedback function based on the received control command for downlink transmission, and can clear the data cache in the HARQ process corresponding to the data when the scheduled data does not support the HARQ feedback function, which avoids a problem of HARQ blocking due to excessive HARQ processes, and prevents the reduction in the effectiveness of data transmission caused by insufficient HARQ process of the terminal device, thereby improving the data transmission efficiency of the terminal device.

It should be noted that, in the embodiments of the present disclosure, whether the scheduled data supports the HARQ feedback function in an explicit indication manner. In some embodiments of the present disclosure, the control command in the embodiments of the present disclosure may include a predetermined information field, so that the terminal device can determine whether the scheduled data supports the HARQ feedback function or not based on the predetermined information field in the control command.

In the embodiments of the present disclosure, a length and/or a position of the predetermined information field are agreed upon by a protocol; or, a length and/or a position of the predetermined information field are preconfigured.

As an example, the length of the predetermined information field and the position of the predetermined information field may be agreed upon by the protocol.

As another example, the length of the predetermined information field and the position of the predetermined information field may be preconfigured.

As another example, the length of the predetermined information field may be agreed upon by the protocol, and the position of the predetermined information field may be preconfigured.

As another example, the length of the predetermined information field may be preconfigured, and the position of the predetermined information field may be agreed upon by the protocol.

It should be noted that in the embodiments of the present disclosure, the predetermined information field may be a newly introduced information field; or the predetermined information field may also be an existing information field.

As an example, an information field named "HARQ disabling flag" may be introduced into the control command. The information field has 1-bit length information. Value "1" means that the scheduled data supports the HARQ feedback function; value "0" means that the scheduled data does not support the HARQ feedback function.

As another example, an existing information field in the control command (such as DCI) may be used to carry a value in corresponding information (for example, RNTI value) as an indication target value to indicate whether the scheduled data supports the HARQ feedback function. For example, if an indication value of a certain information field is a pre-agreed value, it is considered that scheduled data transmission supports the HARQ feedback function; if it is another value, it is considered that scheduled data transmission does not support the HARQ feedback function. Specific implementation of the above technical solutions will be given in other embodiments, and will not be described in detail here.

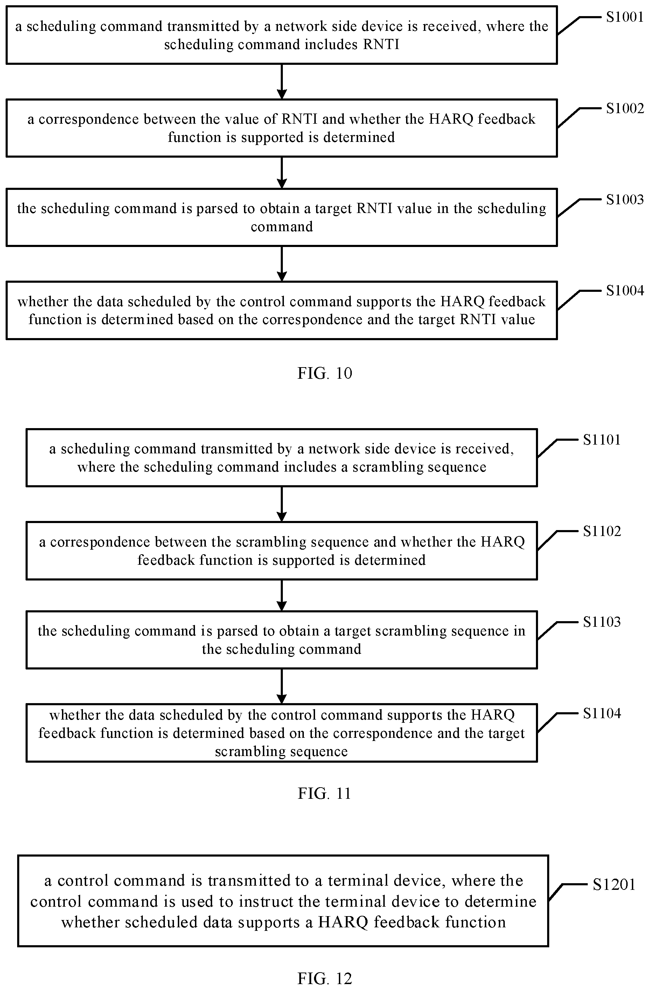

It should be noted that, in embodiments of the present disclosure, whether the scheduled data supports the HARQ feedback function in an implicit indication manner. In some embodiments of the present disclosure, the control command in the embodiments of the present disclosure may also be a scheduling command, and the scheduling command may be an existing communication command, so that the terminal device can obtain, in an implicit manner, information of whether data scheduled by the target control command supports the HARQ feedback function. For example, in an implementation of the present disclosure, whether the scheduled data supports the HARQ feedback function may be indicated by a value of RNTI (Radio Network Temporary Identifier). As an example, referring to FIG. 10, FIG. 10 is another schematic flowchart of a feedback processing method provided by an embodiment of the present disclosure. The feedback processing method may pre-configure a correspondence between the value of RNTI and whether the HARQ feedback function is supported, so that the terminal device can determine whether the scheduled data supports the HARQ feedback function through the RNTI. As shown in FIG. 10, the method may include but not limited to the following steps.

At step S1001, a scheduling command transmitted by a network side device is received, where the scheduling command includes RNTI.

At step S1002, a correspondence between the value of RNTI and whether the HARQ feedback function is supported is determined.

In the embodiments of the present disclosure, the network side device may notify the terminal device in advance of the correspondence between the value of RNTI and whether the HARQ feedback function is supported; or, the network side device and the terminal device can agree in advance on the correspondence between the value of RNTI and whether the HARQ feedback function is supported.

For example, the value range of RNTI may be divided into a first value range and a second value range, and the network side device can notify, through prior communication, the terminal device in advance of a correspondence between a RNTI value within the first value range and whether the HARQ feedback function is supported, and a correspondence between a RNTI value within the second value range and whether the HARQ feedback function is supported. Alternatively, the network side device may pre-agree with the terminal device a correspondence between a RNTI value within the first value range and whether the HARQ feedback function is supported, and a correspondence between a RNTI value within the second value range and whether the HARQ feedback function is supported.

As an example, RNTI values in hexadecimal are represented as 0001 to 003C. Values 0001 to 001E are taken as the first value range, and correspondingly, scheduled data supports the HARQ feedback function; values 001F to 003C are taken as the second value range, and correspondingly, scheduled data does not support the HARQ feedback function. The network side device can notify the terminal device in advance of the above correspondence through prior communication.

As another example, RNTI values in hexadecimal are represented as 0001 to 003C. The network side device may pre-agree with the terminal device the following: values 0001 to 001E are taken as the first value range, and correspondingly, scheduled data supports the HARQ feedback function; values 001F to 003C are taken as the second value range, and correspondingly, scheduled data does not support the HARQ feedback function.

At step S1003, the scheduling command is parsed to obtain a target RNTI value in the scheduling command.

At step S1004, whether the data scheduled by the control command supports the HARQ feedback function is determined based on the correspondence and the target RNTI value.

As an example, a range of RNTI values in hexadecimal is represented as 0001 to 003C, where values 0001 to 001E are taken as the first value range, and correspondingly, scheduled data supports the HARQ feedback function; values 001F to 003C are taken as the second value range, and correspondingly, scheduled data does not support the HARQ feedback function. It is assumed that the target RNTI value is 0010, the target RNTI value is within the first value range, and it may be determined that the data scheduled by the control command supports the HARQ feedback function.

By implementing the embodiments of the present disclosure, the terminal device can determine whether the scheduled data supports the HARQ feedback function or not based on the RNTI value in the received scheduling command, and then can determine whether to enable or disable HARQ, which avoids a problem of HARQ blocking due to excessive HARQ processes, and prevents the reduction in the effectiveness of data transmission caused by insufficient HARQ process of the terminal device, thereby improving the data transmission efficiency of the terminal device.

In some embodiments of the present disclosure, the terminal device may also determine whether the data scheduled by the control command supports the HARQ feedback function through a scrambling sequence. As an example, referring to FIG. 11, FIG. 11 is another schematic flowchart of a feedback processing method provided by an embodiment of the present disclosure. The feedback processing method can pre-configure a correspondence between the scrambling sequence and whether the HARQ feedback function is supported, so that the terminal device can determine whether the data scheduled by the control command supports the HARQ feedback function through the scrambling sequence. As shown in FIG. 11, the method may include but not limited to the following steps.

**At** step S1101, a scheduling command transmitted by a network side device is received, where the scheduling command includes a scrambling sequence.

At step S1102, a correspondence between the scrambling sequence and whether the HARQ feedback function is supported is determined.

For example, two orthogonal scrambling sequences (such as a first scrambling sequence and a second scrambling sequence) may be predefined, the existence of the above first scrambling sequence indicates that scheduled data supports the HARQ feedback function, and inexistence of the above second scrambling sequence indicates that scheduled data does not support the HARQ feedback function.

At step S1103, the scheduling command is parsed to obtain a target scrambling sequence in the command.

At step S1104, whether the data scheduled by the control command supports the HARQ feedback function is determined based on the correspondence and the target scrambling sequence

As an example, the existence of the above first scrambling sequence indicates that scheduled data supports the HARQ feedback function, and the inexistence of the above second scrambling sequence indicates that scheduled data does not support the HARQ feedback function. If the scrambling sequence obtained by the terminal device includes the first scrambling sequence, the terminal device may determine that the scheduled data supports the HARQ feedback function; if the scrambling sequence obtained by the terminal device includes the second scrambling sequence, the terminal device may determine that the scheduled data does not support the HARQ feedback function.

**By** implementing the embodiments of the present disclosure, the terminal device can determine whether the scheduled data supports the HARQ feedback function or not based on the scrambling sequence in the received scheduling command, and then can determine whether to enable or disable HARQ, which avoids a problem of HARQ blocking due to excessive HARQ processes, and prevents the reduction in the effectiveness of data transmission caused by insufficient HARQ process of the terminal device, thereby improving the data transmission efficiency of the terminal device.

In the above embodiments provided by the present disclosure, the method provided by the embodiments of the present disclosure is introduced from the perspective of a terminal device. The feedback processing method in the embodiments of the present disclosure will be further introduced below from the perspective of the network side device.

Referring to FIG. 12, FIG. 12 is a schematic flowchart of a feedback processing method provided by an embodiment of the present disclosure. The method is performed by a network side device. As shown in FIG. 12, the method may include but not limited to the following steps.

At step S1201, a control command is transmitted to a terminal device, where the control command is used to instruct the terminal device to determine whether scheduled data supports a HARQ feedback function.

The target scheduled data is data scheduled after the terminal device receives the control command, or data scheduled by the control command.

For example, the control command is transmitted to the terminal device, so that the terminal device determines whether the data scheduling after receiving the control command supports the HARQ feedback function or not based on the control command; or, the control command is transmitted to the terminal device, so that the terminal device parses the control command to obtain data that needs to be scheduled by the control command, so as to determine whether the data scheduled by the control command supports the HARQ feedback function or not.

In an implementation, the control command is a first physical layer control signaling used to indicate HARQ enabled and/or HARQ disabled; the first physical layer control signaling is used to indicate whether current data scheduling supports the HARQ feedback function.

As an example, a control command is transmitted to the terminal device, and the control command includes a first physical layer control signaling. The first physical layer control signaling is used to instruct the terminal device to enable the HARQ feedback function for the data scheduled by the control command.

As another example, a control command is transmitted to the terminal device, and the control command includes a first physical layer control signaling. The first physical layer control signaling is used to instruct the terminal device to disable HARQ feedback for the data scheduled by the control command.

As another example, a control command is transmitted to the terminal device, and the control command includes a first physical layer control signaling. The first physical layer control signaling is used to instruct the terminal device to enable HARQ feedback function for the data scheduled by the control command, and to disable the HARQ feedback function after the data scheduled by the control command has been transmitted.

**In** an implementation, the control command includes a second physical layer control signaling used to indicate HARQ enabled or HARQ disabled, and a first time period; the second physical layer control signaling is used to indicate whether data scheduling within the first time period supports the HARQ feedback function.

As an example, a control command is transmitted to the terminal device, the control command includes a second physical layer control signaling, and the second physical layer control signaling is used to instruct the terminal device to enable the HARQ feedback function within the first time period after receiving the control command.

As another example, a control command is transmitted to the terminal device, the control command includes a second physical layer control signaling, and the second physical layer control signaling is used to instruct the terminal device to disable the HARQ feedback function within the first time period after receiving the control command.

In an implementation, the control command include a third physical layer control signaling used to indicate HARQ enabled or HARQ disabled; the third physical layer control signaling is used to indicate whether data scheduling within a second time period supports the HARQ feedback function. The second time period is a time period starting from reception of the third physical layer control signaling used to indicate HARQ enabled, and ending until reception of the third physical layer control signaling used to indicate HARQ disabled; or the second time period is a time period starting from reception of the third physical layer control signaling used to indicate HARQ disabled, and ending until reception of the third physical layer control signaling used to indicate HARQ enabled.

As an example, a control command is transmitted to the terminal device, and the control command includes a third physical layer control signaling. The third physical layer control signaling is used to instruct the terminal device to disable HARQ after receiving the control command, until receiving a control command instructing used to instruct the terminal device to enable HARQ.

As another example, a control command is transmitted to the terminal device, and the control command includes a third physical layer control signaling. The third physical layer control signaling is used to instruct the terminal device to enable HARQ after receiving the control command, until receiving a control command used to instruct the terminal device to disable HARQ.

In an implementation, the control command is a control command for uplink transmission or a control command for downlink transmission.

For example, the terminal device may use a control command for uplink transmission as the control command to instruct the terminal device to determine whether scheduled uplink data supports the HARQ feedback function; or the terminal device may also use a control command for downlink scheduling as the control command to instruct the terminal device to determine whether scheduled downlink data supports the HARQ feedback function.

In an implementation, the control command includes a predetermined information field; the predetermined information field is used to indicate whether the scheduled data supports the HARQ feedback function.

It should be noted that in the embodiments of the present disclosure, the predetermined information field may be a newly added information field; or the predetermined information field may also be an existing information field.

As an example, an information field named "HARQ disabling flag" may be introduced into the control command. The information field has 1-bit length information. Value "1" means that the scheduled data supports the HARQ feedback function; value "0" means that the scheduled data does not support the HARQ feedback function.

As another example, a value (for example, an RNTI value) in an existing information field may be used as an indication target value to indicate whether the scheduled data supports the HARQ feedback function or not. For example, if an indication value of a certain information field is a pre-agreed value, it is considered that scheduled data transmission supports the HARQ feedback function; if it is another value, it is considered that scheduled data transmission does not support the HARQ feedback function. Specific implementation of the above technical solutions will be given in other embodiments, and will not be described in detail here.

In an optional implementation, a length and/or a position of the predetermined information field are agreed upon by a protocol; or, a length and/or a position of the predetermined information field are preconfigured.

As an example, the length of the predetermined information field and the position of the predetermined information field may be agreed upon by the protocol.

As another example, the length of the predetermined information field and the position of the predetermined information field may be preconfigured.

As another example, the length of the predetermined information field may be agreed upon by the protocol, and the position of the predetermined information field may be preconfigured.

As another example, the length of the predetermined information field may be preconfigured, and the position of the predetermined information field may be agreed upon by the protocol.

By implementing the embodiments of the present disclosure, the network side device can instruct, through a control command, the terminal device whether scheduled data supports the HARQ feedback function, so that the terminal device enables or disables HARQ, which avoids excessive HARQ processes, and prevents the reduction in the effectiveness of data transmission caused by insufficient HARQ process of the terminal device, thereby improving data transmission efficiency of the terminal device.

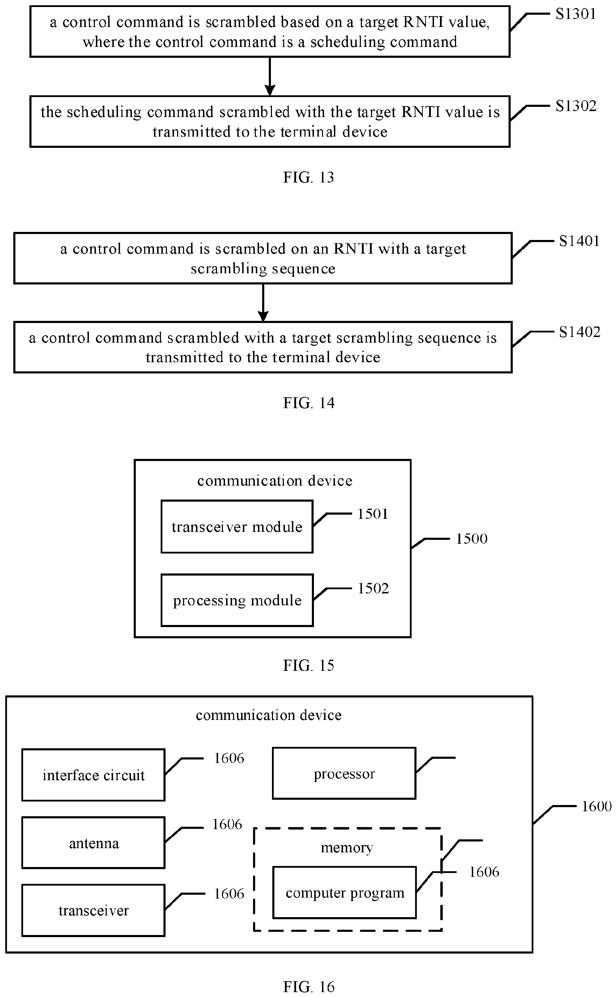

**In** some implementation of the embodiments of the present disclosure, the control command transmitted by the network side device may also be a scheduling command. As an example, referring to FIG. 13, FIG. 13 is another schematic flowchart of a feedback processing method provided by an embodiment of the present disclosure. The method is performed by a network side device. As shown in FIG. 13, the method may include but not limited to the following steps.

At step S1301, a control command is scrambled based on a target RNTI value, where the control command is a scheduling command.

For example, the target RNTI value is determined based on a correspondence between the RNTI value and whether the HARQ feedback function is supported, and the scheduling command is scrambled based on the target RNTI value, so that the scheduling command carries the target RNTI value.

As an example, RNTI values in hexadecimal are represented as 0001 to 003C. RNTI values 0001 to 001E are taken as RNTI values used for that corresponding scheduled data supports the HARQ feedback function; RNTI values 001F to 003C are taken as RNTI values used for that corresponding scheduled data does not support the HARQ feedback function. If the network side device needs to instruct a terminal device whether scheduled data supports the HARQ feedback function, the network side device may randomly select a value (for example, 0010) from 0001 to 001E as the target RNTI value, and may scramble the scheduling command based on the target RNTI value.

At step S1302, the scheduling command scrambled with the target RNTI value is transmitted to the terminal device.

In this embodiment of the present disclosure, the scheduling command scrambled with the target RNTI value is used to implicitly indicate whether the scheduled data supports the HARQ feedback function.

By implementing the embodiments of the present disclosure, the network side device can instruct the terminal device whether the scheduled data supports the HARQ feedback function or not through the target RNTI value in the control command, so that the terminal device enables or disables HARQ, which prevents the terminal device from overrunning the HARQ process, and prevents the reduction in the effectiveness of data transmission caused by insufficient HARQ processes of the terminal device, thereby improving the data transmission efficiency of the terminal device.

In some implementation of the embodiments of the present disclosure, the control command transmitted by the network side device may also be a scheduling command. As an example, referring to FIG. 14. FIG. 14 is another schematic flowchart of a feedback processing method provided by an embodiment of the present disclosure. This method is performed by a network side device. As shown in FIG. 14, the method may include but not limited to the following steps.

**At** step S1401, a control command is scrambled on an RNTI with a target scrambling sequence, where the control command is a scheduling command.

For example, the network side device may pre-define two orthogonal scrambling sequences with the terminal device, where the existence of the above scrambling sequences indicates that scheduled data supports the HARQ feedback function, and the absence of the above orthogonal scrambling sequence indicates that scheduled data does not support the HARQ feedback function. If the network side device needs to instruct the terminal device that the scheduled data supports the HARQ feedback function, the scheduling command is scrambled on the RNTI with the above orthogonal scrambling sequences; or, if the network side device needs to instruct the terminal device that the scheduled data supports the HARQ feedback function, the scheduling command is scrambled on the RNTI with other scrambling sequences different from the above orthogonal scrambling sequences.

At step S1402, the scheduling command scrambled with the target scrambling sequence is transmitted to the terminal device.

In this embodiment of the present disclosure, the scheduling command scrambled with the target scrambling sequence is used to implicitly indicate whether the scheduled data supports the HARQ feedback function.

By implementing the embodiments of the present disclosure, the network side device can instruct the terminal device to confirm whether the scheduled data supports the HARQ feedback function or not through the scrambling sequence in the control command, so that the terminal device enables or disables HARQ, which prevents excessive HARQ process of the terminal device, and prevents the reduction in the effectiveness of data transmission caused by insufficient HARQ processes of the terminal device, thereby improving the data transmission efficiency of the terminal device.

In the above embodiments provided by the present disclosure, the methods provided by the embodiments of the present disclosure are introduced from the perspectives of the terminal device and network side device, respectively. In order to implement multiple functions in the method provided by the above embodiments of the present disclosure, the network side device and the first terminal device may include a hardware structure and a software module to implement the above functions in the form of a hardware structure, a software module, or a hardware structure plus a software module. A certain function among the above functions can be executed by a hardware structure, a software module, or a hardware structure plus a software module.

Referring to FIG. 15, FIG. 15 is a schematic structural diagram of a communication device 1500 provided by an embodiment of the present disclosure. The communication device 1500 shown in FIG. 15 may include a transceiver module 15001 and a processing module 15002. The transceiver module 15001 may include a transmitting module and/or a receiving module. The transmitting module is configured to implement a transmitting function, and the receiving module is configured to implement a receiving function. The transceiver module 15001 may implement the transmitting function and/or the receiving function.

The communication device 1500 may be a terminal device, a device in the terminal device, or a device that can be used in conjunction with the terminal device. Alternatively, the communication device 1500 may be a network side device, a device in the network side device, or a device that can be used in conjunction with the network side device.

The communication device 1500 is a terminal device. The transceiver module 1501 is configured to receive a control command transmitted by the network side device. The processing module 1502 is configured to determine whether the scheduled data supports the HARQ feedback function.

In an implementation, the processing module 1502 is specifically configured to: determine, based on the control command, whether current data scheduling by a first physical layer control signaling supports the HARQ feedback function, where the control command is the first physical layer control signaling used to indicate HARQ enabled and/or HARQ disabled.

In an implementation, the processing module 1502 is specifically configured to: determine, based on the control command, whether data scheduling within a first time period supports the HARQ feedback function, where the control command is a second physical layer control signaling used to indicate HARQ enabled or HARQ disabled, and the first time period.

In an implementation, the processing module 1502 is specifically configured to: determine, based on the control command, whether data scheduling within a second time period supports the HARQ feedback function, where the control command is a third physical layer control signaling used to indicate HARQ enabled or HARQ disabled, and the second time period is a time period starting from reception of the third physical layer control signaling used to indicate HARQ enabled, and ending until reception of the third physical layer control signaling used to indicate HARQ disabled; or the second time period is a time period starting from reception of the third physical layer control signaling used to indicate HARQ disabled, and ending until reception of the third physical layer control signaling used to indicate HARQ enabled.

In an implementation, the transceiver module 1501 is further configured to: after the terminal device transmits uplink data, wait for a scheduling command or a HARQ feedback further transmitted by the network side device, and determine whether to retransmit the uplink data based on the scheduling command or the HARQ feedback further transmitted by the network side device, where the control command is a control command for uplink transmission, and the scheduled data supports the HARQ feedback function; or, after the terminal device transmits uplink data, clear a data cache in a HARQ process corresponding to the uplink data, where the control command is a control command for uplink transmission, and the scheduled data does not support the HARQ feedback function.

In an implementation, the transceiver module 1501 is further configured to: after the terminal device receives downlink data, feed back HARQ feedback information of the downlink data at an indicated position, where the control command is a control command for downlink transmission, and the scheduled data supports the HARQ feedback function; or, after the terminal device receives downlink data, disable HARQ feedback, and clear a data cache in a HARQ process corresponding to the downlink data, where the control command is a control command for downlink transmission, and the scheduled data does not support the HARQ feedback function.

In an implementation, the processing module 1502 is specifically configured to determine whether the scheduled data supports the HARQ feedback function based on indication information in a predetermined information field in the control command.

In an optional implementation, a length and/or a position of the predetermined information field are defined by a protocol; or, a length and/or a position of the predetermined information field are preconfigured.

In an implementation, the processing module 1502 is specifically configured to: determine a correspondence between a value of a radio network temporary identifier (RNTI) and whether the HARQ feedback function is supported, where the control command is a scheduling command; parse the scheduling command to obtain a target RNTI value in the scheduling command; and determine whether the scheduled data supports the HARQ feedback function based on the correspondence and the target RNTI value.

In an implementation, the processing module 1502 is specifically configured to: determine a correspondence between a scrambling sequence and whether the HARQ feedback function is supported, where the control command is a scheduling command; parse the scheduling command to obtain a target scrambling sequence in the scheduling command; and determine whether the scheduled data supports the HARQ feedback function based on the correspondence and the target scrambling sequence.

Based on the communication device of the embodiments of the present disclosure, the terminal device can determine whether the scheduled data supports the HARQ feedback function based on the received control command, and can determine whether to enable the HARQ feedback function for the scheduled data or not, which avoids excessive HARQ processes, and prevents the reduction in the effectiveness of data transmission caused by insufficient HARQ process of the terminal device, thereby improving data transmission efficiency of the terminal device.

The communication device 1500 is a network side device. The transceiver module 1501 is configured to transmit a control command to a terminal device; where the control command are configured to instruct the terminal device to determine whether scheduled data supports a HARQ feedback function.

In an implementation, the control command is a first physical layer control signaling used to indicate HARQ enabled and/or HARQ disabled; and the first physical layer control signaling is used to indicate whether current data scheduling supports the HARQ feedback function.

In an implementation, the control command is a second physical layer control signaling used to indicate HARQ enabled and/or HARQ disabled, and a first time period; and the second physical layer control signaling is used to indicate whether data scheduling within a first time period supports the HARQ feedback function.

In an implementation, the control command is a third physical layer control signaling used to indicate HARQ enabled or HARQ disabled, and the third physical layer control signaling is used to indicate whether data scheduling within a second time period supports the HARQ feedback function, and the second time period is a time period starting from reception of the third physical layer control signaling used to indicate HARQ enabled, and ending until reception of the third physical layer control signaling used to indicate HARQ disabled; or the second time period is a time period starting from reception of the third physical layer control signaling used to indicate HARQ disabled, and ending until reception of the third physical layer control signaling used to indicate HARQ enabled.

In an implementation, the control command is a control command for uplink transmission or a control command for downlink transmission.

In an implementation, the control command includes a predetermined information field; and the predetermined information field is used to indicate whether the scheduled data supports the HARQ feedback function.

In an optional implementation, a length and/or a position of the predetermined information field are defined by a protocol; or, a length and/or a position of the predetermined information field are preconfigured.

In an implementation, the transceiver module 1501 is specifically configured to: scramble the control command based on a target radio network temporary identifier (RNTI) value, where the control command is a scheduling command; and transmit the scheduling command scrambled with the target RNTI value to the terminal device, where the scheduling command scrambled with the target RNTI value is used to implicitly indicate whether the scheduled data supports the HARQ feedback function.

In an implementation, the transceiver module 1501 is specifically configured to: scramble the control command on a radio network temporary identifier (RNTI) with a target scrambling sequence, where the control command is a scheduling command; and transmit the scheduling command scrambled with the target scrambling sequence to the terminal device, where the scheduling command scrambled with the target scrambling sequence is used to implicitly indicate whether the scheduled data supports the HARQ feedback function.

Based on the communication device of the embodiments of the present disclosure, the network side device can instruct the terminal device to confirm whether scheduled data supports the HARQ feedback function through control command, so that the terminal device enables or disables HARQ, which avoids excessive HARQ processes, and prevents the reduction in the effectiveness of data transmission caused by insufficient HARQ process of the terminal device, thereby improving data transmission efficiency of the terminal device.

Referring to FIG. 16, FIG. 16 is a schematic structural diagram of another communication device 1600 provided by an embodiment of the present disclosure. The communication device 1600 may be a network side device, or a terminal device, or may also be a chip, a chip system and a processor that supports the network side device to implement the above method, or may also be a chip, a chip system and a processor that supports a terminal device to implement the above method. The device can be used to implement the method described in the above method embodiments, and reference may be made to the description in the above method embodiments for details.

The communication device 1600 may include one or more processors 16001. The processor 16001 may be a general-purpose processor or a special-purpose processor, or the like, which, for example, may be a baseband processor or a central processor. The baseband processor may be configured to process communication protocols and communication data. The central processor may be configured to control communication devices (such as a base station, a baseband chip, a terminal device, a chip of the terminal device, a DU or a CU, etc.), to execute a computer program, and to process data for the computer program.

Optionally, the communication device 1600 may also include one or more memories 16002, on which a computer program 16003 may be stored. The processor 16001 is configured to execute the computer program 16003 to cause the communication device 1600 to perform steps described in the above method embodiments. Optionally, the memory 16002 may also store data. The communication device 1600 and the memory 16002 may be arranged separately, or integrated together.

Optionally, the communication device 1600 may also include a transceiver 16004 and an antenna 16005. The transceiver 16004 may be referred to as a transceiver unit, a transceiver module, a transceiver circuit, etc., and is configured to implement transceiver functions. The transceiver 16004 may include a receiver and a transmitter. The receiver may be referred to as a receiver unit or a receiving circuit, etc., and is configured to implement the receiving function; the transmitter may be may be referred to as a transmitter unit or a transmitting circuit, etc., and is configured to implement the transmitting function.

Optionally, the communication device 1600 may also include one or more interface circuits 16006. The interface circuit 16006 is configured to receive code instructions and transmit them to the processor 16001. The processor 16001 is configured to execute the code instructions to cause the communication device 1600 to perform the method described in the above method embodiments.

The communication device 1600 is a terminal device. The processor 16001 is configured to execute step S202 in FIG. 2; execute step S302 in FIG. 3; execute step S502 in FIG. 5; execute step S602 in FIG. 6; execute step S802 and step S803 in FIG. 8; execute step S802 and step S903 in FIG. 8; execute step S1002, step S1003 and step S 1004 in FIG. 10; execute step S1102, step S 1103 and step S1104 in FIG. 10. The transceiver 16004 is configured to execute step S201 in FIG. 2; execute step S301 in FIG. 3; execute step S501 in FIG. 5; execute step S601 in FIG. 6; execute step S801 in FIG. 8; execute step S901 in FIG. 9; and execute step S1001 in FIG. 10.

The communication device 1600 is a network side device. The transceiver 16004 is configured to perform step S1201 in FIG. 12; perform step S1301 in FIG. 13; and perform step S1401 in FIG. 14. The processor 16001 is configured to execute step S1302 in FIG. 13; and execute step S1402 in FIG. 14.

In an implementation, the processor 16001 may include a transceiver for implementing receiving and transmitting functions. For example, the transceiver may be a transceiver circuit, an interface, or an interface circuit. The transceiver circuits, interfaces or interface circuits used to implement the receiving and transmitting functions can be arranged separately, or integrated together. The above transceiver circuit, interface or interface circuit can be configured to read and write codes/data, or the above transceiver circuit, interface or interface circuit can be used for signal transmission or transfer.

In an implementation, the processor 16001 may store a computer program, and the computer program runs on the processor 16001, causing the communication device 1600 to perform the method described in the above method embodiments. The computer program may be solidified in the processor 16001, in which case the processor 16001 may be implemented by hardware.

In an implementation, the communication device 1600 may include a circuit, which may implement functions of transmitting or receiving or communicating in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), electronic equipment, etc. The processor and the transceiver may also be manufactured using various IC process technologies, such as complementary metal oxide semiconductor (CMOS), N-type Metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network side device or a terminal device (the first terminal device in the above embodiments), but the scope of the communication device described in the present disclosure is not limited thereto. The structure of the communication device may not be limited by FIG. 16. The communication device may be a stand-alone device or may be a part of a larger device. For example, the communication device may be:
(1) an independent integrated circuit (IC), or a chip, or a chip system or a subsystem;
(2) a collection of one or more ICs, where, optionally, the IC collection may also include a storage component for storing data and computer programs;
(3)ASIC, such as Modem;
(4) a module that can be embedded into other devices;
(5) a receiver, a terminal, an intelligent terminal, a cellular phone, a wireless equipment, a handheld device, a mobile unit, a vehicle-mounted equipment, a network side device, a cloud equipment, an artificial intelligence equipment, etc.;
(6) other component(s), etc.

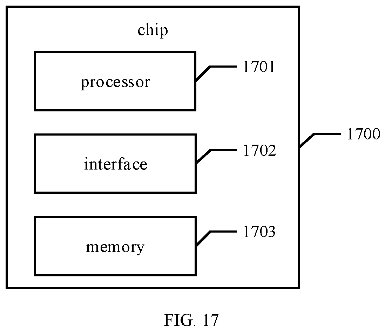

For the case where the communication device may be a chip or a chip system, reference may be made to the schematic structural diagram of the chip shown in FIG. 17. The chip shown in FIG. 17 includes a processor 1701 and an interface 1702. The number of the processor 1701 may be one or more, and the number of the interface 1702 may be multiple.

The chip is configured to implement the functions of the terminal device in the embodiments of the present application, or the chip is configured to implement the functions of the network side device in the embodiments of the present application.

Optionally, the chip further includes a memory 1703, and the memory 1703 is configured to store a necessary computer program and data.

Those skilled in the art can also appreciate that various illustrative logical blocks and steps listed in the embodiments of the present disclosure can be implemented by electronic hardware, computer software, or a combination of both. Whether such functionality is implemented in hardware or software depends on the particular application and overall system design requirements. Those skilled in the art can use various methods to implement the described functions for each particular application, but such implementation should not be understood as exceeding the scope of protection of the embodiments of the present disclosure.

An embodiment of the present disclosure further provides a feedback system. The system includes a communication device as the terminal device and a communication device as the network side device in the aforementioned embodiment of FIG. 15, or the system includes a communication device as the terminal device and a communication device as the network side device in the aforementioned embodiment of FIG. 16.

The present disclosure further provides a readable storage medium, on which instructions are stored. When the instructions are executed by a computer, functions in any of the above method embodiments are implemented.

The present disclosure further provides a computer program product. The computer program product is executed by a computer to implement functions in any of the above method embodiments.

The above embodiments may be implemented in whole or in part by software, hardware, firmware, or any combination thereof. When implemented using software, it may be implemented in whole or in part in the form of a computer program product. The computer program product includes one or more computer programs. When the computer program is loaded and executed on a computer, the processes or functions described in the embodiments of the present disclosure are generated in whole or in part. The computer may be a general-purpose computer, a special-purpose computer, a computer network, or other programmable device(s). The computer program may be stored in a computer-readable storage medium, or transferred from one computer-readable storage medium to another computer-readable storage medium. For example, the computer program may be transferred from a website, a computer, a server, or a data center to another website, another computer, another server or another data center through wired means (such as coaxial cable, optical fiber, digital subscriber line (DSL)), or wireless means (such as infrared, wireless, microwave, etc.). The computer-readable storage medium may be any available medium that can be accessed by a computer, or a data storage device integrated by one or more available media, which includes a server, a data center, and so on. The available media may be magnetic media (e.g., floppy disk, hard disk, magnetic tape), optical media (e.g., high-density digital video discs (DVD)), or semiconductor media (e.g., solid state disk (SSD)) etc.

Those of ordinary skill in the art may appreciate that the first, second, and other numerical numbers involved in the present disclosure are only for convenience of description, and are not used to limit the scope of the embodiments of the present disclosure, or to indicate the order.

At least one in the present disclosure may also be described as one or more, and the plurality may be two, three, four or more, which are not limited by the present disclosure. In the embodiments of the present disclosure, technical features are distinguished by terms "first", "second", "third", etc. The technical features described by the terms "first", "second" and "third" are not in an order of precedence or in an order of size.

The correspondence shown in each table in the present disclosure can be configured or predefined. The values of the information in each table are only for example and can be configured as other values, which is not limited by the present disclosure. In configuring the correspondence between information and each parameter, it is not necessarily required to configure all the correspondences shown in each table. For example, in the table of the present disclosure, the correspondences shown in some rows may not be configured. For another example, appropriate form adjustments can be made based on the above table, such as splitting, merging, etc. The names of the parameters shown in the titles of the above tables may also be other names understandable by the communication device, and the values or expressions of the parameters may also be other values or expressions understandable by the communication device. When implementing the above tables, other data structures can also be used, such as array, queue, container, stack, linear list, pointer, linked list, tree, graph, structure, class, heap, distributed table or hash table.

The term "predefine" in the present disclosure may be understood as define, define in advance, store, pre-store, pre-negotiate, pre-configure, solidify, or pre-burn.

Those of ordinary skill in the art will appreciate that units and algorithm steps of each example described in conjunction with the embodiments disclosed herein can be implemented by electronic hardware, or a combination of computer software and electronic hardware. Whether these functions are performed by hardware or software depends on the specific application and design constraints of the technical solution. Those of ordinary skill in the art may implement the described functionality using different methods for each specific application, but such implementations should not be considered as exceeding the scope of the present disclosure.

Those of ordinary skill in the art can clearly understand that for the convenience and simplicity of description, reference may be made to the corresponding processes in the foregoing method embodiments for the specific working processes of the systems, devices and units described above, which will not be described again here.

The above embodiments are only specific embodiments of the present disclosure, but the protection scope of the present disclosure is not limited thereto. Any person familiar with the technical field can easily think of changes or substitutions within the technical scope disclosed in the present disclosure, all of which shall fall within the protection scope of the present disclosure. Therefore, the protection scope of the present disclosure should be subject to the protection scope of the claims.

## Claims

1. A method for processing hybrid automatic repeat request (HARQ) feedback, performed by a terminal device, comprising:
receiving a control command transmitted by a network side device; and
determining whether scheduled data supports a HARQ feedback function.

2. The method according to claim 1, wherein determining whether the scheduled data supports the HARQ feedback function comprises:
determining, based on the control command, whether current data scheduling by a first physical layer control signaling supports the HARQ feedback function, wherein the control command is the first physical layer control signaling used to indicate HARQ enabled and/or HARQ disabled.

3. The method according to claim 1, wherein determining whether the scheduled data supports the HARQ feedback function comprises:
determining, based on the control command, whether data scheduling within a first time period supports the HARQ feedback function, wherein the control command is a second physical layer control signaling used to indicate HARQ enabled or HARQ disabled, and the first time period.

4. The method according to claim 1, wherein determining whether the scheduled data supports the HARQ feedback function comprises:
determining, based on the control command, whether data scheduling within a second time period supports the HARQ feedback function,
wherein the control command is a third physical layer control signaling used to indicate HARQ enabled or HARQ disabled, and the second time period is a time period starting from reception of the third physical layer control signaling used to indicate HARQ enabled, and ending until reception of the third physical layer control signaling used to indicate HARQ disabled; or the second time period is a time period starting from reception of the third physical layer control signaling used to indicate HARQ disabled, and ending until reception of the third physical layer control signaling used to indicate HARQ enabled.

5. The method according to claim 1, further comprising:
after the terminal device transmits uplink data, waiting for a scheduling command or a HARQ feedback further transmitted by the network side device, and determining whether to retransmit the uplink data based on the scheduling command or the HARQ feedback further transmitted by the network side device, wherein the control command is a control command for uplink transmission, and the scheduled data supports the HARQ feedback function; or
after the terminal device transmits the uplink data, clearing a data cache in a HARQ process corresponding to the uplink data, wherein the control command is the control command for uplink transmission, and the scheduled data does not support the HARQ feedback function.

6. The method according to claim 1, further comprising:
after the terminal device receives downlink data, feeding back HARQ feedback information of the downlink data at an indicated position, wherein the control command is a control command for downlink transmission, and the scheduled data supports the HARQ feedback function; or
after the terminal device receives the downlink data, disabling HARQ feedback, and clearing a data cache in a HARQ process corresponding to the downlink data, wherein the control command is the control command for downlink transmission, and the scheduled data does not support the HARQ feedback function.

7. The method according to any one of claims 1 to 6, wherein determining whether the scheduled data supports the HARQ feedback function comprises:
determining whether the scheduled data supports the HARQ feedback function based on indication information in a predetermined information field in the control command.

8. The method according to claim 7, wherein a length and/or a position of the predetermined information field are defined by a protocol; or, the length and/or the position of the predetermined information field are preconfigured.

9. The method according to any one of claims 1 to 6, wherein determining whether the scheduled data supports the HARQ feedback function comprises:
determining a correspondence between a value of a radio network temporary identifier (RNTI) and whether the HARQ feedback function is supported, wherein the control command is a scheduling command;
parsing the scheduling command to obtain a target RNTI value in the scheduling command; and
determining whether the scheduled data supports the HARQ feedback function based on the correspondence and the target RNTI value.

10. The method according to any one of claims 1 to 6, wherein determining whether the scheduled data supports the HARQ feedback function comprises:
determining a correspondence between a scrambling sequence and whether the HARQ feedback function is supported, wherein the control command is a scheduling command;
parsing the scheduling command to obtain a target scrambling sequence in the scheduling command; and
determining whether the scheduled data supports the HARQ feedback function based on the correspondence and the target scrambling sequence.

11. A method for processing hybrid automatic repeat request (HARQ) feedback, performed by a network side device, comprising:
transmitting a control command to a terminal device,
wherein the control command is used to instruct the terminal device to determine whether scheduled data supports a HARQ feedback function.

12. The method according to claim 11, wherein the control command is a first physical layer control signaling used to indicate HARQ enabled and/or HARQ disabled; and the first physical layer control signaling is used to indicate whether current data scheduling supports the HARQ feedback function.

13. The method according to claim 11, wherein the control command is a second physical layer control signaling used to indicate HARQ enabled and/or HARQ disabled, and a first time period; and the second physical layer control signaling is used to indicate whether data scheduling within the first time period supports the HARQ feedback function.

14. The method according to claim 11, wherein the control command is a third physical layer control signaling used to indicate HARQ enabled or HARQ disabled, and the third physical layer control signaling is used to indicate whether data scheduling within a second time period supports the HARQ feedback function,
wherein the second time period is a time period starting from reception of the third physical layer control signaling used to indicate HARQ enabled, and ending until reception of the third physical layer control signaling used to indicate HARQ disabled; or the second time period is a time period starting from reception of the third physical layer control signaling used to indicate HARQ disabled, and ending until reception of the third physical layer control signaling used to indicate HARQ enabled.

15. The method according to any one of claims 11 to 14, wherein the control command is a control command for uplink transmission or a control command for downlink transmission.

16. The method according to any one of claims 11 to 15, wherein the control command comprises a predetermined information field; and the predetermined information field is used to indicate whether the scheduled data supports the HARQ feedback function.

17. The method according to claim 16, wherein a length and/or a position of the predetermined information field are defined by a protocol; or, the length and/or the position of the predetermined information field are preconfigured.

18. The method according to any one of claims 11 to 15, wherein transmitting the control command to the terminal device comprises:
scrambling the control command based on a target radio network temporary identifier (RNTI) value, wherein the control command is a scheduling command; and
transmitting the scheduling command scrambled with the target RNTI value to the terminal device, wherein the scheduling command scrambled with the target RNTI value is used to implicitly indicate whether the scheduled data supports the HARQ feedback function.

19. The method according to any one of claims 11 to 15, wherein transmitting the control command to the terminal device comprises:
scrambling the control command on a radio network temporary identifier (RNTI) with a target scrambling sequence, wherein the control command is a scheduling command; and
transmitting the scheduling command scrambled with the target scrambling sequence to the terminal device, wherein the scheduling command scrambled with the target scrambling sequence is used to implicitly indicate whether the scheduled data supports the HARQ feedback function.

20. A communication device, comprising:
a transceiver module, configured to receive a control command transmitted by a network side device; and
a processing module, configured to determine whether scheduled data supports a HARQ feedback function.

21. A communication device, comprising:
a transceiver module, configured to transmit a control command to a terminal device,
wherein the control command is used to instruct the terminal device to determine whether scheduled data supports a HARQ feedback function.

22. A communication device, comprising a processor and a memory, wherein a computer program is stored in the memory, and the processor executes the computer program stored in the memory to perform the method according to any one of claims 1 to 10.

23. A communication device, comprising a processor and a memory, wherein a computer program is stored in the memory, and the processor executes the computer program stored in the memory to perform the method according to any one of claims 11 to 19.

24. A communication device, comprising a processor and an interface circuit,
wherein the interface circuit is configured to receive code instructions and transmit the code instructions to the processor, and
the processor is configured to execute the code instructions to perform the method according to any one of claims 1 to 10.

25. A communication device, comprising a processor and an interface circuit,
wherein the interface circuit is configured to receive code instructions and transmit the code instruction to the processor, and
the processor is configured to execute the code instructions to perform the method according to any one of claims 11 to 19.

26. A computer-readable storage medium, configured to store instructions, wherein the instructions are executed to perform the method according to any one of claims 1 to 10.

27. A computer-readable storage medium, configured to store instructions, wherein the instructions are executed to perform the method according to any one of claims 11 to 19.
